## Europäisches Patentamt

## European Patent Office

## Office européen des brevets

(11) Publication number: **0 159 747**

**B1**

## EUROPEAN PATENT SPECIFICATION

(45) Date of publication of patent specification: **02.11.88**

(51) Int. Cl.⁴: **B 23 B 27/14, B 23 B 27/08**

(21) Application number: **85200492.8**

(22) Date of filing: **18.01.82**

(60) Publication number of the earlier application in accordance with Art. 76 EPC: **0 057 625**

(54) **Cutoff insert.**

(30) Priority: **02.02.81 US 230229**

(43) Date of publication of application:
**30.10.85 Bulletin 85/44**

(45) Publication of the grant of the patent:
**02.11.88 Bulletin 88/44**

(84) Designated Contracting States:
**BE CH DE FR GB IT LI NL SE**

(56) References cited:
**DE-A-1 815 209**
**DE-A-2 404 302**
**DE-C- 426 244**
**DE-C- 494 265**
**DE-C- 919 762**
**US-A-2 256 847**

(73) Proprietor: **Manchester Tool Company**
**5142 Manchester Road**
**Akron Ohio 44319 (US)**

(72) Inventor: **Huston, Mark F.**
**7383 Case Avenue**
**Mentor Ohio 44060 (US)**

(74) Representative: **Smith, Norman Ian et al**
**F.J. CLEVELAND & COMPANY 40-43 Chancery Lane**
**London WC2A 1JQ (GB)**

## Description

This invention relates to metal working and more particularly to a chip controlling cutoff insert.

Metal cutting inserts having chip controlling shapes are known in the art. US-A-3 654 681 discloses a metal cutoff tool characterised by the fact that the cutting portion thereof is provided with a chip breaker surface that includes opposed chamfer surfaces located rearwardly of the cutting edge that assist in providing clearance for chip removal purposes. US-A-3 815 191 teaches a chip forming insert which imparts to the chip a longitudinally extending bulge or thickened portion which stiffens the chip and modifies its form. US-A-3 973 308 teaches a cutting tool which has several depressions or notches separated from each other and situated inside and spaced from the cutting edge. US-A-2 164 303 teaches a metal cutting tool having grooves extending from nicks in the cutting edge.

The present invention provides a cutoff tool or insert having an elongated body, comprising a cutting edge, a longitudinal channel opening through said edge, a top surface disposed above and back from said cutting edge, and a chip-forming and -controlling surface extending rearwardly from said cutting edge to said top surface, characterized in that said longitudinal channel extends from said cutting edge to said top surface.

Optional features are defined in the dependent claims.

Embodiments of the invention will now be described with reference to the accompanying drawings, in which:

Figure 1 is an enlarged perspective view of a portion of a cutoff insert constructed according to the present invention;

Figure 2 is a top plan view of an insert constructed according to the present invention;

Figure 3 is a side elevation view of the insert shown in Figure 2;

Figure 4 is a front view of the insert shown in Figure 2;

Figure 5 is a section view of the insert shown in Figure 4 taken along the line V-V;

Figure 6 is a side elevation view of an insert, as shown in Figure 1, ground to provide a positive rake angle;

Figure 7 is a side elevation of an insert, as shown in Figure 1, ground to provide a negative rake angle;

Figure 8 is a side elevation view of an insert with grooves which will provide a negative rake angle over their width;.

Figure 9 is a side elevation view of an insert with grooves which will provide a positive rake angle over their width;

Figure 10 is a top view of a cutoff insert wherein the top of the tip portion is higher than the top of the shank portion;

Figure 11 is a side view of the insert shown in Figure 10;

Figure 12 is a top view of a cutoff insert wherein the cutting edge is formed on a radius;

Figure 13 is a side view of the insert shown in Figure 12;

Figure 14 is a side view of a double ended insert; and

Figure 15 is a front view of the insert shown in Figure 14.

Referring now to the drawings, there is shown a metal cutoff insert 10 constructed according to the present invention. Insert 10 includes a shank or body portion 11 and a tip portion 12. The shank 11 and tip 12 are arranged coextensively to define an overall insert 10 of an elongated configuration. The shank 11 includes a top surface 20, opposed side surfaces 21 and 22, and a truncated V-shaped bottom surface 23, with the arrangement of these parts being similar to the arrangement shown in US-A-2 964 833 whose teachings are herein incorporated by reference.

Carbide tip 12 includes a transversely extending cutting edge 31 that is defined by the top of a forward face 32. Tip 12 includes a V-shaped bottom surface 35 and opposed side walls 36 and 37. The side walls 36 and 37 are preferably ground so as to provide the requisite degree of side and back clearance in the manner well known in the prior art. Tip 12 is fused in a known manner to the forward end of the shank 11 by brazing or other known metal joining techniques. Chamfers 40 and 41 are provided at the juncture between the top surface 64 and the opposed side surfaces 36 and 37. The effect and purpose of the chamfers 40 and 41 is fully described in US-A-3 654 681 whose teachings are herein incorporated by reference.

Tip 12 includes a longitudinal groove or channel 50 extending rearward from cutting edge 31. A curved shelf shaped rake portion 52 is provided extending rearward and upward from cutting edge 31 to a top surface 64. Longitudinal channel 50 extends through the cutting edge 31 and the shaped rake portion 52. Channel 50 may extend through the entire length of tip 12, but need not do so.

During a metal cutting operation, longitudinal channel 50 acts to narrow a chip while the curved shelf portion 52 curls the chip to the point of breaking into clockspring or figure-nine shapes which are well known in this art. Dimensions of the channel 50 and shaped rake portion 52, and radii on the rear of the shaped rake portion 52, can all be varied to provide good chip control over a wide range of speed and feed conditions. In use, the illustrated chip controlling geometry has provided good chip control.

A succession of transverse grooves 62 are provided across cutting tip 12. Grooves 62 are not as deep as the longitudinal channel 50 and are preferably perpendicular to and spaced along the length of tip 12. After a period of metal cutting as the cutting edge 31 becomes worn the tip 12 can be reground back to the next successive groove 62 to provide a new cutting edge 31 having associated therewith a shaped chip controlling surface which is very similar or identical to the chip controlling shape with the original cutting edge. Tip 12 narrows slightly as it extends rearward. Thus, each new ground cutting edge will be slightly narrower than the preceding cutting edge.

For high speed steel cutoff blades, the blade need not be narrowed or be tapered as it extends rearward from the cutting edge. If these parallel blades are formed with a regrindable chip control geometry, as disclosed, the cutting edge will remain the same width even after being reground. This characteristic of no change in width after regrind would be beneficial on multiple spindle automatic machines where part length is determined by the location of the cutoff tool and the width of the cutting edge must remain the same.

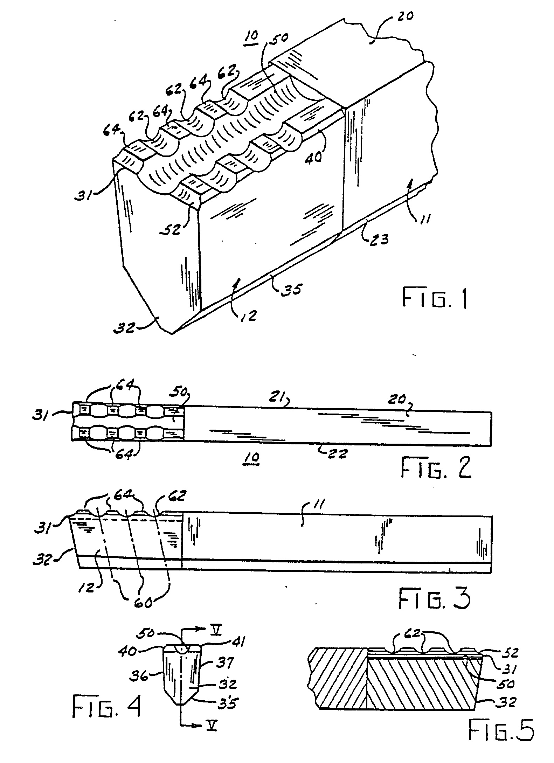

In the cutting tool illustrated in Figure 1 the tip can be reground three times. When tip 12 is ground back the proper selected distance a new cutting edge 31 is defined and the portion of groove 62 remaining forms a new surface similar to 52 and provides chip control as explained above. For an insert having a cutting edge width of 4.8 mm, a groove 62 width of 1.5 mm and depth of .3 mm and channel 50 width of 1.9 mm and depth of .51 mm have been found to work well.

Referring now to Figure 3, dashed lines 60 indicate the lines to which tip 12 is ground to provide new cutting edges having associated substantially identical chip controlling surfaces. However, tip 12 can be ground back either a little to the right or left of line 60, as shown in Figure 3, to provide a cutting edge with a different rake angle. If desired, lines 60 can be physically marked on cutting tip 12 by a known method such as laser etching, electroetching, grinding, or the like. If lines are physically formed on tip 12 this could greatly facilitate regrinding. The insert shown in Figure 3 has a neutral rake angle, and if it is ground back to line 60 the new cutting edge will also have a neutral rake angle. If, however, tip 12 is ground back to provide a cutting edge 31, as shown in Figure 6, slightly to the left of Figure 3 line 60, but still within groove 62, a positive rake angle will be provided. On the other hand, if tip 12 is ground back to provide a cutting edge 31, as shown in Figure 7, slightly to the right of Figure 3 line 60, but still within groove 62 a negative rake angle will be provided.

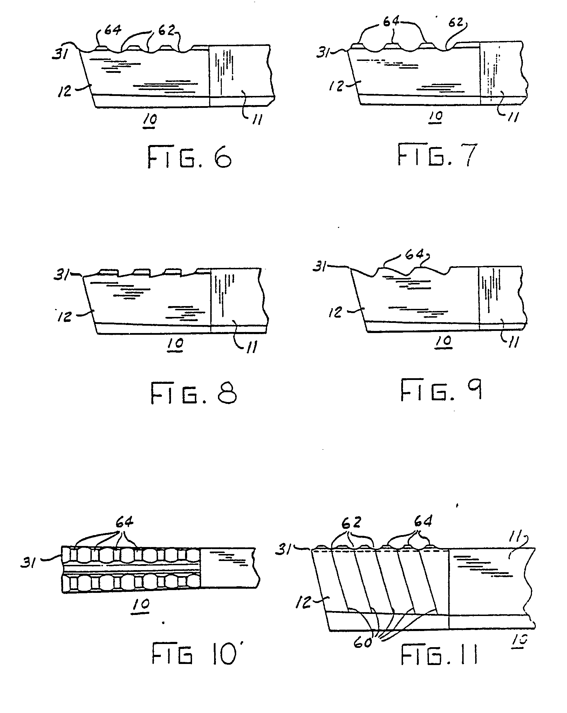

It should also be understood that while groove 62 is shown with a semi-circle configuration, numerous other configurations can be provided. For example, as shown in Figure 8, the front of the cross groove can drop sharply, then slant up to the top 64 of insert 10. This construction would provide a groove having a negative rake over most of its width. Alternatively, as shown in Figure 9, the cross groove could slope downward from the top 64 and blend into a rear wall which curves up to the top 64. This construction would provide a groove having a positive rake over its width. Of course, various other groove shapes can be provided, and also the groove shapes provided on a single insert can be individually different.

The tip 12 can be coated with a desired coating such as titanium nitride, titanium carbide, or aluminum oxide. The desired coating is preferably applied after the desired shapes are formed in the top of tip 12. Thus, after each regrind each new chip controlling surface will still have associated therewith a coated rake face.

During use, only the chip controlling surface 52 associated with the cutting edge 31 will be exposed to direct chip engagement. That is, the successive recessed grooves 62 will not be exposed to direct chip contact until tip 12 is ground back to define a new cutting edge extending through the associated groove 62. While in the preferred embodiment the cutting edge 31 extends at 90 degrees to the longitudinal axis of tool 10 and groove 62 extends at 90 degrees to the centerline, and the longitudinal channel extends parallel to the centerline, there may be instances when other configurations are more desirable. The teaching of the invention can still be practiced if grooves 62 are not at 90 degrees to the centerline, if the cutting edge is not at 90 degrees to the centerline, if grooves 62 are not parallel or of the same shape, or if the longitudinal channel 50 is not parallel to the centerline of insert 11. Further, it is not necessary that channel 50 be continuous or that groove 62 or channel 50 be of uniform cross section or exactly central to edge 31.

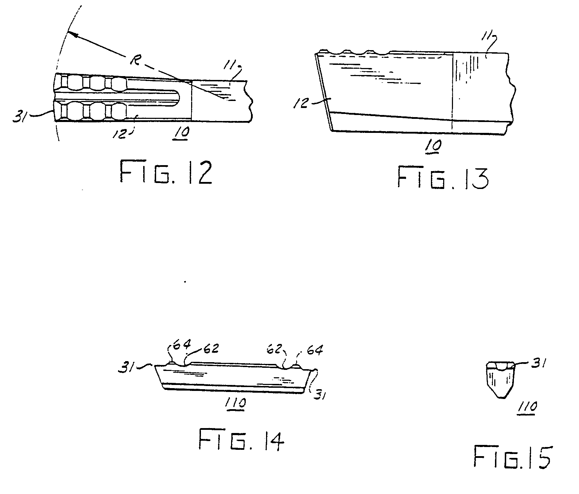

Figures 10 and 11 show an embodiment of cutoff insert 10 wherein the top of tip 12 is higher than the top of shank 11. Figures 12 and 13 show an embodiment of cutoff insert 10 wherein the front cutting edge is formed along a selected radius, R. Figures 18 and 19 show a double ended cutoff insert 110.

The disclosed cutoff insert 10 provides good chip control over a wide range of speeds, feeds and materials. Cutoff insert 10 is also regrindable a number of times, depending on the number of transverse grooves 62 provided in tip 12. The teaching of this invention, while generally explained in terms of a cutoff insert 10 are not limited thereto, but are applicable to a wide range of cutting tools and inserts. When the terms insert or tool are used in the specification or claims, it is intended that they be construed to mean both inserts and tools.

Reference is made to the EP-A-0057625 application from which the present application is a divisional application.

## Claims

1. A cutoff tool or insert (10) having an elongated body, comprising a cutting edge (31), a longitudinal channel (50) opening through said edge, a top surface (64) disposed above and back from said cutting edge, and a chip-forming and -controlling surface (52) extending rearwardly from said cutting edge to said top surface, characterized in that said longitudinal channel (50) extends from said cutting edge to said top surface.

2. A tool or insert as claimed in claim 1 wherein the channel (50) extends through the entire length of the top surface (64).

3. A tool or insert as claimed in either preceding claim wherein the top surface (64) is higher than the top of the remainder of the insert.

4. A tool or insert as claimed in either of claims 1 and 2 having a front surface (32) extending downward from said cutting edge (31); and opposed side walls (36, 37) extending rearward from the edges of said front surface and downwad and inward with respect to said top surface (64).

5. A tool or insert as claimed in claim 4 having a V-shaped bottom (35) extending rearward from said front surface (32) and upward toward said opposed side walls (36, 37).

6. A tool or insert as claimed in claim 1 having a second cutting edge, a second top surface, a second chip-forming and -controlling surface and a second longitudinal channel arranged similarly to the corresponding first mentioned features at the opposite end of the elongated body.

## Patentansprüche

1. Abstechschneidwerkzeug oder -einsatz (10) mit einem länglichen Körper, umfassend eine Schneidkante (31), einen durch die Schneidkante hindurch sich öffnenden länglichen Kanal (50), eine obere Fläche (64), die oberhalb der Schneidkante und gegenüber dieser nach hinten versetzt angeordnet ist und eine spanformende und spankontrollierende Fläche (52), die sich von der Schneidkante nach hinten zu der oberen Fläche hin erstreckt, dadurch gekennzeichnet, daß sich der längliche Kanal (50) von der Schneidkante zur oberen Fläche hin erstreckt.

2. Werkzeug oder Einsatz nach Anspruch 1, dadurch gekennzeichnet, daß sich der Kanal (50) über die gesamte Länge der oberen Fläche (64) erstreckt.

3. Abstechschneideinsatz nach einem der vorhergehenden Ansprüche, dadurch gekennzeichnet, daß die obere Fläche (64) höher ist als die Oberseite des restlichen Einsatzes.

4. Abstechschneideinsatz nach Anspruch 1 oder 2, gekennzeichnet durch eine Stirnfläche (32), die sich von der Schneidkante (31) nach unten erstreckt, und durch voneinander abgewandte seitliche Wände (36, 37), die sich von den Kanten der Stirnfläche nach hinten und bezüglich der oberen Fläche (64) nach unten und innen erstrekken.

5. Abstechschneideinsatz nach Anspruch 4, dadurch gekennzeichnet, daß er einen V-förmigen Boden (35) aufweist, der sich von der Stirnfläche (32) nach hinten und nach oben zu den seitlichen Wänden (36, 37) hin erstreckt.

6. Abstechschneideinsatz nach Anspruch 1, dadurch gekennzeichnet, daß er eine zweite Schneidkante, eine zweite obere Fläche, eine zweite spanformende und spankontrollierende Fläche und einen zweiten länglichen Kanal aufweist, die in gleicher Weise wie die entsprechenden erstgenannten Merkmale an dem entgegengesetzten Ende des länglichen Körpers angeordnet sind.

## Revendications

1. Outil ou plaquette de saignée (10) comportant un corps allongé, comprenant un bord coupant (31), un canal longitudinal (50) s'ouvrant suivant ce bord, une surface supérieure (64) disposée au-dessus du bord coupant et à l'arrière de celui-ci, et une surface (52) de formage et de contrôle des copeaux, s'étendant vers l'arrière depuis le bord coupant susdit vers la surface supérieure précitée, caractérisé en ce que ce canal longitudinal (50) s'étend depuis le bord coupant jusqu'à la surface supérieure susdite.

2. Outil ou plaquette suivant la revendication 1, caractérisé en ce que le canal (50) s'étend suivant la totalité de la longueur de la surface supérieure (64).

3. Outil ou plaquette suivant l'une ou l'autre des revendications précédentes, caractérisé en ce que la surface supérieure (64) se situe à un niveau plus élevé que le haut du reste de la plaquette ou outil.

4. Outil ou plaquette suivant l'une ou l'autre des revendications 1 et 2, caractérisé en ce qu'il comporte une surface avant (32) s'étendant vers le bas depuis le bord coupant (31), et des parois latérales opposées (36, 37) s'étendant vers l'arrière depuis les bords de la surface avant et vers le bas et vers l'intérieur par rapport à la surface supérieure (64).

5. Outil ou plaquette suivant la revendication 4, caractérisé en ce qu'une base en forme de V (35) s'étend vers l'arrière depuis la surface avant (32) et vers le haut en direction des parois latérales opposées (36, 37).

6. Outil ou plaquette suivant la revendication 1, caractérisé en ce qu'il comprend un second bord coupant, une seconde surface supérieure, une seconde surface de formage et de contrôle des copeaux, et un second canal longitudinal, agencés d'une façon similaire aux caractéristiques correspondantes, mentionnées précédemment, et ce à l'extrémité opposée du corps allongé.

FIG. 1

FIG. 2

FIG. 3

FIG. 4

FIG. 5

FIG. 6

FIG. 7

FIG. 8

FIG. 9

FIG 10

FIG. 11

FIG. 12

FIG. 13

FIG. 14

FIG.15